# EUROPEAN PATENT APPLICATION

(11) **EP 4 516 495 A1**
(43) Date of publication of application: **05.03.2025**
(21) Application number: 23194280.6
(22) Date of filing: 30.08.2023
(51) Int. Cl.: B29C 70/60, B05D 1/26, B05D 1/42, B29C 73/02, B29C 73/16, B29D 99/00, F03D 1/06, B29C 64/106, B33Y 10/00, B33Y 80/00, B29L 31/08

(54) **METHOD FOR MANUFACTURING A WIND TURBINE BLADE OR WIND TURBINE BLADE SECTION AND FILLER MATERIAL APPLICATION APPARATUS**

(71) Applicant: Siemens Gamesa Renewable Energy A/S, 7330 Brande (DK)
(72) Inventor: Dircks, Stefan, 24976 Handewitt (DE); Justesen, Per Mørup, 9230 Svenstrup (DK); Magnussen, Jeppe Kærgaard, 9000 Aalborg (DK); Mortensen, Morten, 9920 Aalborg Ø (DK); Rokohl, Simon Groenlund, 9000 Aalborg (DK); Østergaard, Rasmus, 9530 Støvring (DK)
(74) Representative: SGRE-Association

(57) **Abstract**

The present invention relates to a method for manufacturing a wind turbine blade, comprising the steps
a) Manufacturing a raw wind turbine blade (1), wherein the raw wind turbine blade (1) comprises at least one groove (2) running at least with a directional component along a spanwise direction(S);
b) Providing a filler material application apparatus (4)
- comprising a filler application head (41) with at least one dispenser nozzle (416) adapted to dispense a hardenable filler material (3),
- and comprising at least one filler material source (49) comprising the hardenable filler material in a flowable state,
- wherein the filler application head (41) is moveable at least along the spanwise direction (S);

c) Positioning the filler application head (41) of the filler material application apparatus (4) over a section of the groove (2);
d) Effecting a flow of hardenable filler material (3) from the filler material source (49) to the at least one dispenser nozzle (416);
e) Moving the filler application head (41) in the spanwise direction (S) along an extension of groove (2), thereby filling the groove (2) with the hardenable filler material (3) that is subsequently hardened so that at least one filled groove (21) is provided.

The method according to the invention allows for an automation of currently manually executed filler material application steps and thus both increases production speed and lowers costs for wind turbine blades.

## Description

The present invention relates to a method for manufacturing a wind turbine blade or wind turbine blade section and to a filler material application apparatus for applying a hardenable filler material into an at least one groove running at least with a directional component along a spanwise direction of a raw wind turbine blade or raw wind turbine blade section.

Wind turbine blades, especially for offshore use, with the evolvement of technology continuously increase in size. Regarding the main dimensions current blades can reach a root diameter of approximately 4m, a blade length of well over 100m while typical chord lengths can reach up to 7m or even more.

Typically, wind turbine blades are manufactured by lamination of multiple layers of fiber material in a mold having the shape of a negative impression of the outer blade geometry.

Although the dimensions of the blades are literally tremendous the production of wind turbine blades still includes many steps that require manual labor. A major portion of the manual labor is represented by the application of filler material in order to restore an ideal airfoil geometry of the blade after it has been removed from the mold in a raw or so called "green" state.

One approach including a transversal fiber material layup is the IntegralBlade^{®} technology that is described in detail in EP 1 310 351 A1 which plays an important role as it avoids glue joints at the leading edge and/or trailing edge of the blade that are both disadvantageous from an aerodynamic perspective and a mechanical stiffness perspective. Rather, the entire blade is produced as a single piece with continuous fiber plies at the leading and the trailing edge.

A typical fiber material layup in a mold includes one or multiple air extraction means that are adapted to extract excess air from the mold before and/or during resin infusion of the fiber material layup. The air extraction means do not become part of the final blade structure but are an auxiliary production tool. Typical air extraction means include semipermeable membranes, i.e. membranes that allow gases, in particular air, to pass and block the passage of liquids, in particular resin. The permeable membranes are connected to a vacuum source located externally of the mold so that excess air from the mold can be extracted therefrom. Sometimes such air extraction means are also referred to as "filters".

The air extraction means are typically placed in the mold with an extension along a spanwise or longitudinal direction so that the raw wind turbine blade after removing it from the mold has grooves at its outer surface running along the spanwise or longitudinal direction at the positions where the air extraction means have been placed in the mold.

These grooves have to be filled with a hardenable filler material to restore the intended airfoil geometry of the final wind turbine blade which, as of today, still requires manual labor. After the application of the filler material to the grooves the filler material is typically smoothened with a spatula so that as little filler material as possible protrudes from the grooves which, as of today, is done by manual labor as well. After application, smoothening and hardening of the filler material excess filler material, e.g. residual filler material protruding beyond the intended airfoil geometry and/or laterally outwardly from the groove, is ground off in a subsequent production step to restore the ideal airfoil geometry of the blade.

But the manual application of filler material is not only disadvantageous from a productivity perspective. As the application of filler material is mainly done in an overhead position the execution as a manual labor step means an enormous physical strain for the involved workers. Additionally, the substances used as a filler material may be hazardous to the health of workers. As most jurisdictions impose various limitations with regards to labor safety (e.g. ergonomics specifications, lifting weights for overhead work, threshold concentrations of potentially hazardous substances in the air) on employers the retention of the manual labor steps implies a barrier for both the dimensions of the blades that can be produced and for any potential productivity gains.

Additionally, as said grooves are typically located in either convex or concave curved cross-sections of the blade, it is not easy for workers doing the application of filler material manually to maintain the intended airfoil geometry of the blade without compromising it. However, a near target shape of the airfoil geometry is of utmost importance as deviations therefrom can lead to performance losses of the blade, e.g. in the form of increased drag and/or reduced lift.

Therefore it is one object of the present invention to provide a method for manufacturing a wind turbine blade or wind turbine blade section that eliminates above technical disadvantages and allows for a further automation of the production and thus both increases production speed and lowers costs.

It is a further object of the present invention to provide a filler material application apparatus for applying a hardenable filler material into an at least one groove running at least with a directional component along a spanwise direction of a raw wind turbine blade or raw wind turbine blade section that allows for an automation of filler material application steps that are currently executed as manual labor steps. Accordingly, a method for manufacturing a wind turbine blade or wind turbine blade section is proposed.

The method comprises the following steps:
a) Manufacturing a raw wind turbine blade or raw wind turbine blade section by lamination of one or multiple layers of fiber material, wherein the raw wind turbine blade or raw wind turbine blade section comprises at least one groove running at least with a directional component along a spanwise direction;
b) Providing a filler material application apparatus
   - comprising a filler application head with at least one dispenser nozzle adapted to dispense a hardenable filler material,
   - and comprising at least one filler material source comprising the hardenable filler material in a flowable state, wherein the filler material source is coupled to the dispenser nozzle of the filler application head through at least one fluid line,
   - wherein the filler application head is moveable at least along the spanwise direction;
c) Positioning the filler application head of the filler material application apparatus over a section of the groove;
d) Effecting a flow of hardenable filler material from the filler material source to the at least one dispenser nozzle of the filler application head of the filler material application apparatus;
e) Moving the filler application head at least with a directional component in the spanwise direction along an extension of the at least one groove, thereby filling the groove with the hardenable filler material that is subsequently hardened so that at least one filled groove is provided.

That the filler application head is positioned "over" the at least one groove in particular has the meaning that the filler application head is positioned near to the groove in a predefined distance that allows the dispenser nozzle to fill the hardenable filler material in the flowable state into a cavity provided by the groove.

"Section" of the groove in particular refers to a longitudinal section of the groove. The filler application head in step c) might in particular be positioned over an end section of the at least one groove, wherein "end" might in particular mean a root side end or tip side end of the groove.

The at least one groove might in particular have a depth between 1 mm and 10 mm, in particular between 2 mm and 5 mm. The at least one groove might be the result of previous process steps, in particular it might represent a negative impression of a volume in that air extraction means or "filters" have been placed in a mold for lamination of the raw wind turbine blade or raw wind turbine blade section.

The hardenable filler material might comprise a suitable plastic material and can be provided in a paste-like state with a relatively high viscosity so that it sticks to the groove and does not flow away under the influence of gravity. The hardenable filler material might in particular comprise a 2 component system, in particular a 2 component epoxy system.

The filler material source may in particular comprise two separate storage volumes for each component of the 2 component system, e.g. one storage volume for a resin and another storage volume for a hardener. The filler material source of the filler material application apparatus may in particular comprise a mixing device that is adapted to mix the two components from the separate storage volumes together to create the hardenable filler material in a flowable state.

After the hardenable filler material has been filled into the groove in step e) it might slightly protrude above a cross-section of the airfoil geometry of the final wind turbine blade or wind turbine blade section wherein such residual amounts of filler material might be ground off in subsequent production steps after the filler material has hardened completely to bring the blade back to its target airfoil geometry.

A raw wind turbine blade or raw wind turbine blade section might also be referred to as "green wind turbine blade" or "green wind turbine blade section". "Raw" herein in particular having the meaning of unfinished, in particular without a final surface coating applied to an outer surface.

The main process parameters of the filler material application apparatus include a feed speed at that the filler application head is moved along the spanwise direction and a feed rate of hardenable filler material through the dispenser nozzle. These process parameters might be individually controlled when executing the method in order to achieve the best possible filling result that requires as little as possible rework.

Advantageously, the method according to the invention allows to fill grooves at raw wind turbine blades or blade sections fully automatic without the need for manual labor. This allows for significant productivity gains in the production of wind turbine blades as the filler material application apparatus used in the method according to the invention can perform the filling tasks quicker and with less downtime and/or without breaks. Additionally, the method is also beneficial under a Health Safety Environment (HSE) perspective as overhead works in environments with potentially hazardous substances in the air are avoided. An operator controlling the equipment used in the method according to the invention might do this remote from the filling site in a clean environment. Further, the method according to the invention allows for a more consistent filling quality as human errors are eliminated through the automation of the filling process.

According to a further embodiment, the filler application head of the filler material application apparatus comprises at least one spatula, wherein step e) comprises smoothening a surface of the hardenable filler material after it has been filled to the groove with the at least one spatula as the filler application head is moved along the spanwise direction.

The at least one spatula might in particular be fixed to the filler application head so that it can be moved along the spanwise direction together with the filler application head. In particular, the at least one spatula can be arranged behind the at least one dispenser nozzle with respect to a predefined movement direction along the spanwise direction.

In embodiments the filler application head may comprise multiple spatula segments. For example, at least two spatula segments can be arranged at the filler application head neighboring each other along a circumferential direction of the blade or blade section. Alternatively or additionally, at least two spatula segments may be arranged spaced apart along the spanwise direction. Herein in is in particular possible that the at least two spatula segments have a different extension in a direction running normally to a ground of the at least one groove. In other words, one of the spatula segments might reach closer to the groove than the other spatula segment which has the advantage that the surface of the hardenable filler material can be smoothened step by step.

According to a further embodiment, a shape of the spatula is adaptable at least with respect to a plane running perpendicular to the spanwise direction, wherein step e) comprises adapting the shape of the spatula so that it corresponds with a shape of a cross-section of an airfoil geometry of the wind turbine blade or wind turbine blade section at a given spanwise position.

In embodiments, the shape of the spatula might be continuously adapted in step e) as the filler application head is moved along the spanwise direction to correspond with a local shape of a cross-section of the airfoil geometry of the wind turbine blade or wind turbine blade section.

The expression "shape of a cross-section of an airfoil geometry" herein in particular refers to the final blade geometry, i.e. the spatula in particular adopts a shape of the final blade. In other words, the at least one spatula is capable of adopting a negative shape of the airfoil geometry of the blade or blade section at a given spanwise position in a cross-section where the groove is located.

The adaption of the shape of the spatula ensures that grooves located in convex and/or concave cross-sections of the raw wind turbine blade or raw wind turbine blade section can be filled with the hardenable filler material in the best possible way, i.e. without applying too much filler material that protrudes above a cross-section of the airfoil geometry of the final wind turbine blade or wind turbine blade section. This significantly reduces the effort to rework the filled groove and especially reduces later grinding efforts.

According to yet a further embodiment, the filler application head is moveable in a height direction with respect to an intended state of use of the filler material application apparatus, wherein step e) comprises continuously adjusting a height position of the filler application head as the filler application head is moved along the spanwise direction to correspond with a local height position of the groove. Depending on the type of blade or blade section, typical heights at that the grooves are located during the filling process may reach from 3 m to 6 m.

In embodiments, the raw wind turbine blade or raw wind turbine blade section can be fixed by a fixture in a predefined height over the ground so that the spanwise direction runs essentially parallel to the ground, wherein in particular a suction side and/or pressure side of the raw wind turbine blade or raw wind turbine blade section are located sidewards.

Such a fixture might in particular be fixed to a root section of the raw wind turbine blade or blade section. In particular the fixture can allow for a rotational movement of the raw wind turbine blade or blade section along the spanwise direction.

It may be in particular possible that steps c) to e) are executed at a pressure side and/or a suction side of the raw wind turbine blade or raw wind turbine blade section. Alternatively or additionally, the filler material application apparatus can be located sideways adjacent to the raw wind turbine blade or raw wind turbine blade section, in particular during execution of the method steps c) to e).

The raw wind turbine blade or blade section might comprise more than one groove running at least with a directional component along a spanwise direction, for example at least one groove at a suction side and at least one groove at the pressure side and/or multiple grooves at the suction side and/or pressure side. The filling of grooves at the pressure side and the suction side may be done serially or simultaneously, wherein separate filler material application apparatuses can be located sideways adjacent to the raw wind turbine blade or raw wind turbine blade section at the pressure side and the suction side. Multiple grooves commonly provided at the pressure side or the suction side might be filled serially or simultaneously, e.g. by using separate filler material application apparatuses which are spaced along the spanwise direction of the blade.

In embodiments, the filler application head of the filler material application apparatus may be rotatable at least along one axis, wherein the at least one axis in particular runs parallel to the spanwise direction, and wherein in particular step e) includes continuously adapting a rotational position of the filler application head as the filler application head is moved along the spanwise direction to ensure the dispenser nozzle and/or the spatula of the filler application head are oriented over the groove at a given spanwise position at a predefined filler application angle.

The filler application head might have other rotational degrees of freedom of movement as well, e.g. other possible rotational axes are axes running perpendicularly to the spanwise direction, for example an axis running parallel to the chordwise direction and/or an axis being both oriented perpendicularly to the spanwise and the chordwise direction.

According to a further embodiment, the filler application head of the filler material application apparatus comprises multiple actuators arranged spaced apart, in particular along a circumferential direction of the raw wind turbine blade or raw wind turbine blade section, wherein the actuators are each adapted to locally apply a force on the spatula and wherein the actuators are used in step e) to adapt the shape of the spatula.

For example, the actuators can comprise pneumatic or hydraulic pressure cylinders. Alternatively, the actuators may comprise fluid tight expansion pockets that can be individually inflated by a pressurized fluid. Yet alternatively, the actuators may comprise electrical actuators, such as stepper motors. It is in particular possible that the actuators are mechanically connected to the spatula, the shape of which is actively adjusted by the actuators.

The spatula may in particular comprise a plastic material, in particular rubber and/or a thermoplastic elastomer. A stiffness, in particular a bending stiffness, of the spatula can be in particular dimensioned so that the shape of the spatula with respect to a plane running perpendicular to the spanwise direction can be modified by the actuator's forces.

According to a further embodiment, the filler material application apparatus comprises at least one processing means adapted to at least individually control the actuators and/or the height position of the filler application head.

The processing means may be implemented in hardware and/or in software. If said entity is implemented in hardware, it may be embodied as a device, e.g. as a computer or as a processor or as a part of a system, e.g. a computer system. If said entity is implemented in software it may be embodied as a computer program product, as a function, as a routine, as a program code or as an executable object.

Alternatively or additionally, the processing means can be adapted to also control the feed rate of the hardenable filler material in a flowable state and/or the feed speed of the filler application head.

According to yet a further embodiment, the method comprises step ee) applying an optical marking on an outer surface of the raw wind turbine blade or raw wind turbine blade section in at least one region laterally neighboring the groove.

The filler material application apparatus, in particular the filler application head of the filler material application apparatus, may comprise
- at least one optical sensor adapted to detect the optical marking,
- wherein said optical sensor is operably coupled to the processing means.

In step e) data from the optical sensor may be processed by the processing means to adapt the shape of the spatula by individually controlling the multiple actuators to ensure that as little as possible of the hardenable filler material protrudes from the groove and/or to adjust a height position of the filler application head.

The optical marking might comprise a dot or line of light that is projected onto an outer surface of the raw wind turbine blade or raw wind turbine blade section in at least one region laterally neighboring the groove. For this purpose, the filler material application apparatus, in particular the filler application head, might comprise at least one optical projection means, in particular a dot and/or line projection means, adapted to project said dot or line of light.

In embodiments, the optical projection means can in particular include a laser and/or other types of focused light sources.

The optical marking on the outer surface of the raw wind turbine blade or raw wind turbine blade section gives an indication of the area that is to be filled with the hardenable filler material and thus enables to position the filler application head at the right height position and/or to adjust the spatula to a shape that corresponds best with an intended airfoil geometry of the final blade or blade section.

In other embodiments the optical marking might comprise a color marking in the at least one region laterally neighboring the groove, wherein the color marking might, for example, comprise a line of paint and/or an adhesive tape.

Step ee) might be in particular executed during the execution of step e).

According to a further embodiment, the filler material application apparatus, in particular the filler application head of the filler material application apparatus, comprises at least one camera and/or at least one distance sensor. The at least one camera and/or at least one distance sensor are operably coupled to the processing means and wherein in step e) data from the at least one camera and/or at least one distance sensor is processed by the processing means to adapt the shape of the spatula by individually controlling the multiple actuators to ensure that as little as possible of the hardenable filler material protrudes from the groove and/or to adjust a height position of the filler application head.

Said at least one camera may alternatively or additionally be used for a quality check of the filled groove in that surface parameters of the filled groove are compared to predefined target values of surface parameters. Such a quality check can be in particular performed by the processing means of the filler material application apparatus. If the measured surface parameters show unacceptable deviations from the target values the processing means may effect a correction of the current process parameters, e.g. feed rate of the hardenable filler material, feed speed of the filler application head, height position and/or shape of the spatula, to bring the actual surface parameters of the filled groove back to the target values.

The processing means might comprise software that comprises self-learning algorithms and/or components of artificial intelligence (AI) that learn based on control interventions in the past.

Finally, according to a further embodiment the filler material application apparatus can comprise a processing means operably coupled with at least one data source, wherein the data source comprises data describing a three-dimensional shape of an outer surface of the wind turbine blade or wind turbine blade section, wherein in step e) the filler application head is moved along the spanwise direction under continuous adaption of the height position of the filler application head and/or under continuous adaption of the shape of the spatula of the filler application head based on said data.

The data describing a three-dimensional shape of an outer surface of the wind turbine blade or wind turbine blade section might in particular be stored in the data source as a typical 3D-CAD file, e.g. a Step-file or similar file formats that the skilled person deems appropriate.

In other embodiments, certain process parameters, e.g. feed rate of the hardenable filler material, feed speed of the filler application head, height position and/or shape of the spatula might be controlled by an operator of the filler material application apparatus by a human-machine interface provided by the filler material application apparatus.

According to a second aspect of the invention, a filler material application apparatus for applying a hardenable filler material into an at least one groove running at least with a directional component along a spanwise direction of a raw wind turbine blade or raw wind turbine blade section is proposed. The filler material application apparatus according to the second aspect of the invention may be in particular adapted for use in a method according to the first aspect of the invention.

The filler material application apparatus comprises:
- a filler application head with at least one dispenser nozzle adapted to dispense a hardenable filler material,
- and at least one filler material source comprising the hardenable filler material in a flowable state, wherein the filler material source is coupled to the dispenser nozzle of the filler application head through at least one
   fluid line,
- wherein the filler application head is moveable at least along the spanwise direction of the raw wind turbine blade or raw wind turbine blade section.

According to an advantageous embodiment, the filler material application apparatus may comprise at least one pump fluidically coupled to the filler material source and the fluid line, wherein the pump is adapted and configured to effect a flow of hardenable filler material from the filler material source to the at least one dispenser nozzle of the filler application head.

The fluid line, at least in sections thereof, may comprise at least one pipe and/or at least one hose, in particular a flexible hose. The fluid line may comprise at least one flexible longitudinal portion that is adapted to compensate a movement of the filler application head, in particular in the height direction.

According to a further embodiment, the filler application head comprises at least one spatula adapted and configured to smoothen a surface of the hardenable filler material after it has been filled to the groove, wherein in particular a shape of the spatula is adaptable at least with respect to a plane running perpendicular to the spanwise direction of the raw wind turbine blade or raw wind turbine blade section with respect to an intended use of the filler material application apparatus so that the shape of the spatula is adaptable to correspond with a shape of a cross-section of an airfoil geometry of the wind turbine blade or wind turbine blade section at a given spanwise position.

According to yet a further embodiment, the filler application head is mounted to an apparatus base that is moveable on the ground, wherein in particular the apparatus base comprises a drive system and wheels that allow movement of the apparatus base in the spanwise direction of the raw wind turbine blade or raw wind turbine blade section.

In an alternative embodiment the filler application head is mounted at a crane or gantry system above the raw wind turbine blade or raw wind turbine blade section in an intended state of use of the filler material application apparatus, wherein the crane or gantry system allows movement of the filler application head in the spanwise direction of the raw wind turbine blade or raw wind turbine blade section.

The filler application head may be fixed to the apparatus base so that the filler application head can in particular be moved together with the apparatus base. The apparatus base may be either mounted on rails on the ground or the wheels may be placed directly on the ground. In the latter case the drive system may include a guiding system, e.g. an optical guiding system with guide markings on the ground, to direct the movement of the apparatus base along an intended path along the spanwise direction of the blade or blade section.

In embodiments, the filler material source may be arranged at the apparatus base so that the filler material source can be in particular moved together with the apparatus base. Additionally or alternatively, the pump that is adapted to effect a flow of hardenable filler material from the filler material source to the at least one dispenser nozzle of the filler application head may be arranged at the apparatus base as well.

Lastly, according to a further embodiment the filler application head comprises one or multiple wheels that allow for a rolling movement of the filler application head on an outer surface of the raw wind turbine blade or raw wind turbine blade section. In particular, at least two wheels can be arranged at the filler application head spaced along a circumferential direction of the raw wind turbine blade or raw wind turbine blade section with respect to an intended state of use of the filler material application apparatus, wherein in particular the at least one dispenser nozzle is arranged between the two wheels.

By providing the filler application head with wheels it can be in particular ensured that a distance between the dispenser nozzle and the groove of the wind turbine blade or blade section stays constant as the filler application head is moved along the spanwise direction during operation of the filler material application apparatus. In addition, the wheels allow that at least a portion of the dead weight of the filler application head is supported by the blade or blade section so that the apparatus base and/or a mechanical link between the apparatus base and the filler application head is relieved from forces resulting from said dead weight of the filler application head. As a result, the filler application head may be guided along an extension of the groove with increased accuracy which helps to improve an overall groove filling quality.

The embodiments and features described with reference to the method of the present invention apply mutatis mutandis to the apparatus of the present invention and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a schematic side view of a raw wind turbine blade with unfilled grooves running at least with a directional component along a spanwise direction;
Fig. 2a shows cross-section A-A of Fig. 1 of a raw wind turbine blade with unfilled grooves;
Fig. 2b shows cross-section A-A of Fig. 1 of a raw wind turbine blade with filled grooves;
Fig. 2c shows cross-section A-A of Fig. 1 of a raw wind turbine blade with filled grooves after a grinding step;
Fig. 3 shows a schematic side view of the raw wind turbine blade of Fig. 1 during execution of the method according to the invention with a filler material application apparatus located sideways adjacent to the raw wind turbine blade;
Fig. 4 shows a schematic cross-sectional view of the raw wind turbine blade of Fig. 1 during execution of the method according to the invention with a filler material application apparatus located sideways adjacent to the raw wind turbine blade;
Fig. 5 shows a schematic view of a filler material application apparatus according to the invention;
Fig. 6 shows the filler application head of the filler material application apparatus as Detail A according to Fig. 5;
Fig. 7 shows the filler application head of the filler material application apparatus as cross-section B-B according to Fig. 6;
Fig. 8 shows a schematic side view of the raw wind turbine blade of Fig. 1 during execution of the method according to the invention with a filler material application apparatus located sideways adjacent to the raw wind turbine blade at a crane or gantry system;
Fig. 9 shows the filler application head of the filler material application apparatus as cross-section C-C according to Fig. 7, the filler application head in a concave shape;
Fig. 10 shows the filler application head of the filler material application apparatus as cross-section C-C according to Fig. 7, the filler application head in a convex shape; and
Fig. 11 shows a flow chart of an embodiment of the method according to the invention.

In the Figures, like reference numerals designate like or functionally equivalent elements, unless otherwise indicated.

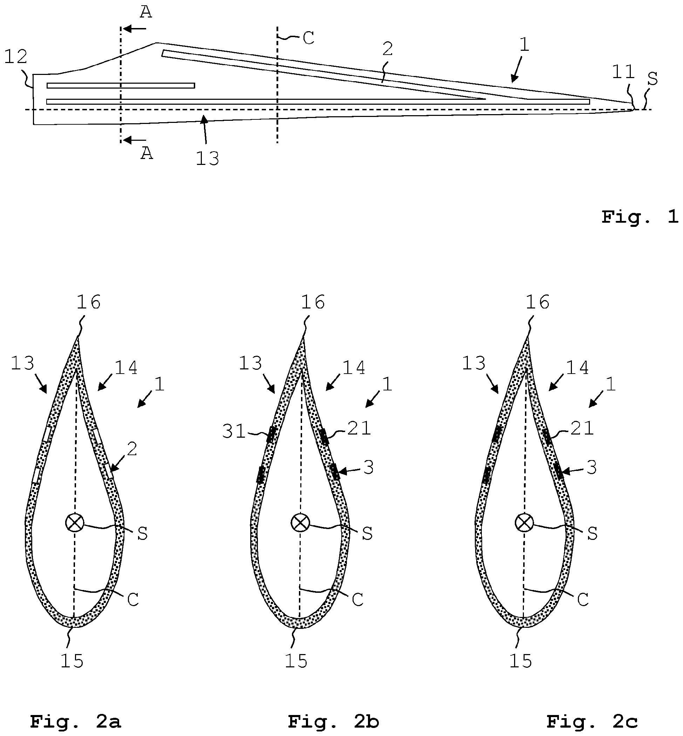

**Fig. 1** shows a schematic side view of a raw wind turbine blade 1 with three grooves 2 running at least with a directional component along the spanwise direction S. The raw wind turbine blade 1 comprises a blade tip 11 and a blade root 12, wherein the blade 1 might be fixed by a fixture in a predefined height over the ground G at the root 12 during execution of the method according to the invention. The blade structure is hollow with at least one cavity on the inside and comprises a shell comprising multiple layers of fiber material and core material. The blade 1 comprises an airfoil geometry with a pressure side 13 and a suction side 14, wherein a section of the shell associated with the pressure side 13 and a section of the shell associated with the suction side 14 meet at a leading edge 15 and a trailing edge 16.

In **Fig. 2a** a cross-section in the plane A-A of a raw wind turbine blade 1 is shown, wherein the grooves 2 are unfilled which corresponds to a condition of the raw blade 1 as it is removed from a mold. The grooves 2 correspond to positions at which air extraction material or "filters" have been placed in the mold. As the grooves 2 form deviations from an ideal airfoil geometry they are subsequently filled with a hardenable filler material having a paste-like consistency, which is shown in **Fig. 2b****.**

The hardenable filler material 3 is applied to the grooves 2 so that the hollow space is completely filled which creates filled grooves 21. A surface of the filler material 3 might be smoothened with a spatula after filling the grooves 2 so that as little filler material 3 as possible protrudes beyond the intended airfoil geometry and/or laterally outwardly from the grooves 2. However, this cannot completely be avoided so that the filled grooves 21 might still have a protruding portion 31 of filler material 3 that subsequently has to be grinded off.

**Fig. 2c** shows a condition of the blade 1 after grinding, wherein the protruding portion 31 of filler material 3 has been removed with an appropriate grinding means so that the blade 1 has an ideal airfoil geometry around its full circumference.

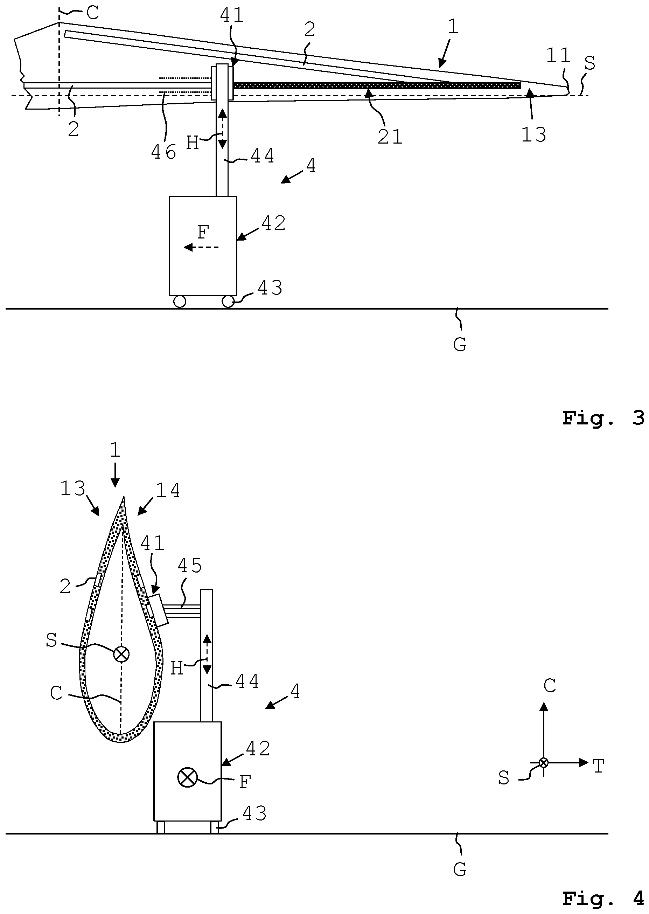

**Fig. 3** shows a schematic side view of the raw wind turbine blade 1 of Fig. 1 during execution of the method according to the invention with a filler material application apparatus 4 located sideways adjacent to the raw wind turbine blade 1. An upper groove 2 is still in an unfilled state whereas a lower groove 2 has already been partly filled and thus represents a partly filled groove 21.

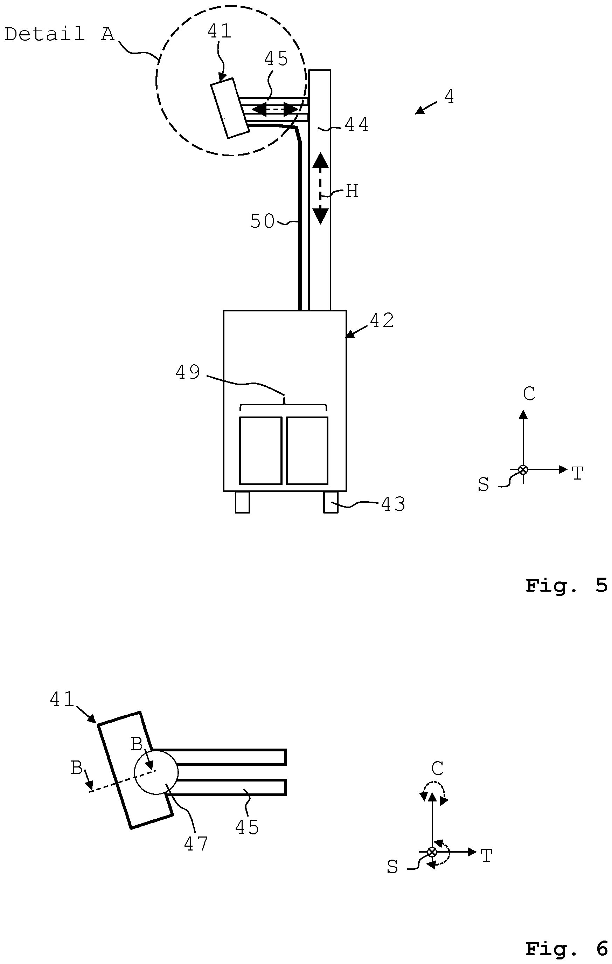

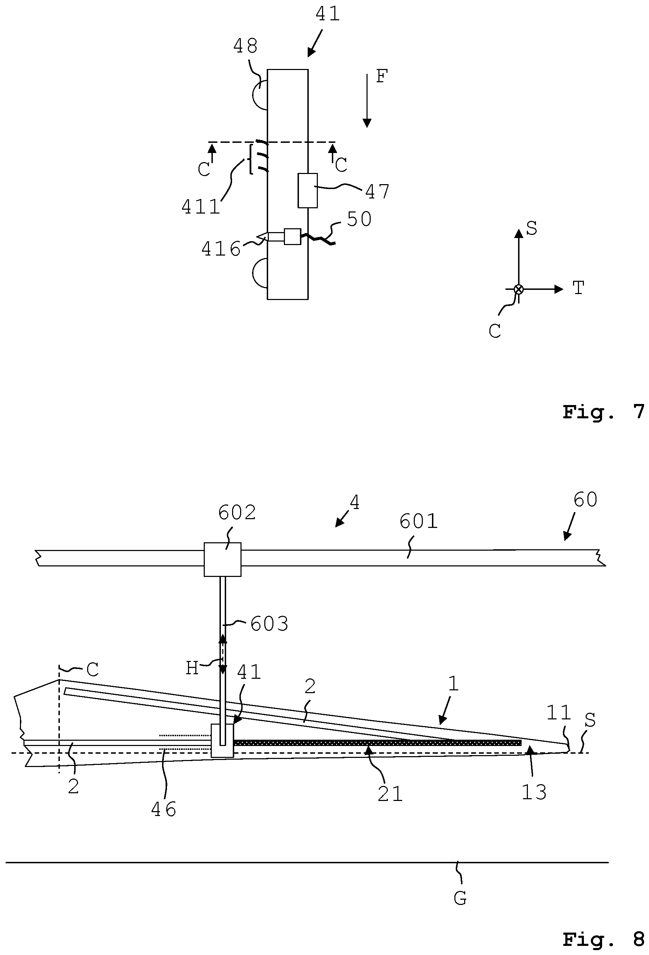

The filler material application apparatus 4 comprises a filler application head 41 with at least one dispenser nozzle 416 adapted and configured to dispense a hardenable filler material 3 into the groove 2. The filler material application apparatus 4 further comprises at least one filler material source 49 comprising the hardenable filler material in a flowable state, wherein the filler material source 49 is coupled to the dispenser nozzle 416 of the filler application head 41 through at least one fluid line 50 (see Fig. 5 and Fig. 7). The filler application head 41 is moveable at least along the spanwise direction S of the blade 1 in a feed direction F.

The filler application head 41 is fixed to an apparatus base 42 having a drive system and wheels 43 that allow the apparatus base 42 to move along the spanwise direction S. As the apparatus base 42 moves, the filler application head 41 moves with it. The filler application head 41 is mounted at the apparatus base 42 through a support structure 44 and a filler application head connector 45 (see Fig. 5). One end of the filler application head connector 45 is arranged at the support structure 44 and another end of the filler application head connector 45 at the filler application head 41. The support structure 44 may in particular extend essentially vertical. The filler application head connector 45 may in particular extend essentially parallel to the ground G.

The filler application head 41 is further moveable in a height direction H, wherein the required degree of freedom of movement can be provided by means of the support structure 44 and/or by means of the filler application head 41 itself. It is in particular possible that the support structure 44 comprises a linear drive system adapted to move the filler application head connector 45 in height.

In order to initiate the filling process the filler application head 41 is positioned over a section of the groove 2 in a distance that allows the at least one dispenser nozzle 416 to dispense the hardenable filler material in a flowable state into a cavity provided by the groove 2. Then, a flow of hardenable filler material 3 from the filler material source 49 to the at least one dispenser nozzle 416 of the filler application head 41 is effected. Subsequently, the filler application head 41 is moved at least with a directional component in the spanwise direction S along an extension of the at least one groove 2, so that the groove 2 is filled with the hardenable filler material 3. After filling of the groove 2 with the hardenable filler material 3 the hardenable filler material 3 is hardened so that a filled groove 21 is created.

As the filler application head 41 is moved along the spanwise direction S in feed direction F a height position H of the filler application head 41 is continuously adjusted to correspond with a local height position of the groove 2.

The method according to the invention may comprise the application of an optical marking 46 on an outer surface of the raw wind turbine blade 1 in at least one region laterally neighboring the groove 2, in particular in two opposing regions laterally neighboring the groove 2. Therein, the filler material application apparatus 4, in particular the filler application head 41 of the filler material application apparatus 4, may comprise at least one optical sensor adapted to detect the optical marking, wherein said optical sensor may be operably coupled to a processing means of the filler material application apparatus 4. Data from the optical sensor may be processed by the processing means adjust the height position H of the filler application head 41 and/or to adapt the shape of a spatula 411 of the filler application head 41 (see Fig. 7, Fig. 9 and Fig. 10).

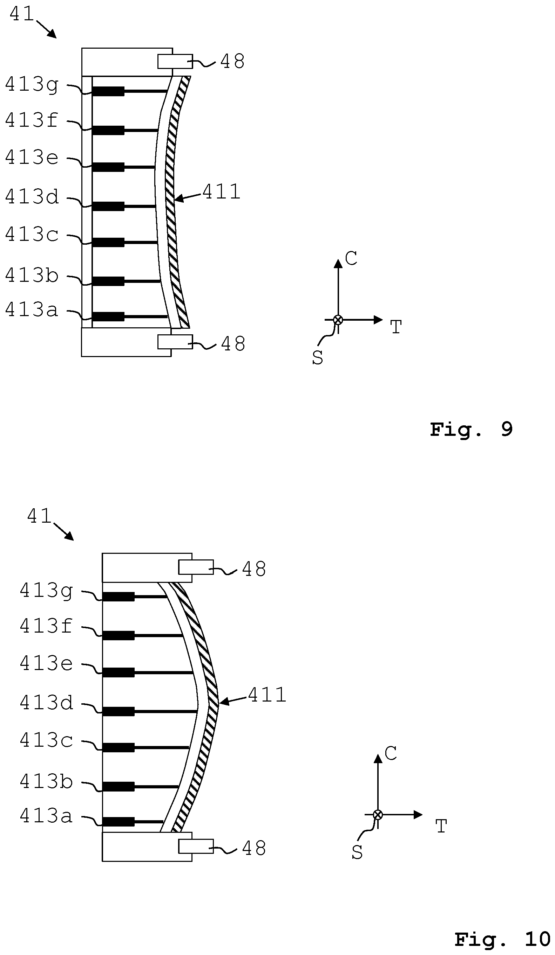

The optical marking 46 on the outer surface of the raw wind turbine blade 1 gives an indication of the area that is to be filled with the hardenable filler material 3 and thus enables to position the filler application head 41 at the right height position and/or to adjust the spatula 411 to a shape that corresponds best with an intended airfoil geometry of the final blade (see Fig. 9 and Fig. 10).

The optical marking 46 may in particular comprise a dot or line of light, wherein the filler material application apparatus 4, in particular the filler application head 41 of the filler material application apparatus 4, may comprise at least one optical projection means, in particular a dot and/or line projection means, that is adapted and configured to project a dot or line of light 46 onto an outer surface of the raw wind turbine blade 1.

Now referring to **Fig. 4** which shows a schematic cross-sectional view of the raw wind turbine blade of Fig. 1 during execution of the method according to the invention. In the shown embodiment the filling is done at the suction side 14 of the blade 1.

The filler application head 41 of the filler material application apparatus 4 is rotatable at least along an axis running parallel to the spanwise direction S so that the filler application head 41 can be oriented over the groove 2 at a given spanwise position S at a predefined filler application angle. As the filler application head 41 is moved along the spanwise direction S the rotational position of the filler application head 41 may be continuously adapted to ensure the best possible filler material application along the full extension of the groove 2. As the blade 1 has variable cross-sections over its length and eventually might be twisted the rotatability of the filler application head 41 has a significantly positive influence on the filling result.

Further, the direction of view of Fig. 4 allows to understand the structure of the filler application head connector 45 better. The filler application head connector 45 may in particular comprise a linear drive system that allows for a movement of the filler application head 41 essentially along a profile thickness direction T of the blade 1 in order to adjust a distance of the filler application head 41 from the groove 2 and/or to compensate for varying thickness of the blade 1 along the spanwise direction S.

In **Fig. 5** the filler material application apparatus 4 is shown in more detail, whereas **Fig. 6** shows Detail A of Fig. 5.

As it can be seen in Fig. 5 the filler material source 49 is arranged at the apparatus base 42. The filler material source 49 is connected through the fluid line 50 to the filler application head 41, in particular to a dispenser nozzle 416 of the filler application head 41 (see Fig. 7). In order to effect a flow of hardenable filler material in a flowable state from the filler material source 49 at least one pump may be arranged at the apparatus base 42 that is adapted and configured to transport a volume of hardenable filler material to the filler application head 41. The filler material source 49 comprises two separate storage volumes for two components of a 2 component system, in particular of a 2 component epoxy system. In one of the storage volumes a resin is provided and in another storage volume a hardener. Additionally, the filler material source 49 may comprise a mixing device that is adapted to mix the two components from the separate storage volumes together to create the hardenable filler material. The mixing device may be arranged at the apparatus base 42 as well. Alternatively, the two components from the separate storage volumes may be transported independently from each other through separate fluid lines to the filler application head 41 and mixed there.

Now referring to Fig. 6. The filler application head 41 can be mounted to the filler application head connector 45 by means of a filler application head joint 47 having at least one rotational degree of freedom of movement along the spanwise direction S. Additionally or alternatively the joint 47 or a different joint might have a rotational degree of freedom of movement along the chordwise direction C and/or along an axis running perpendicularly to both the spanwise direction S and the chordwise direction C, for example the profile thickness direction T.

In **Fig. 7** the filler application head 41 is shown in a cross-sectional view through plane B-B depicted in Fig. 6. The filler application head 41 comprises at least two wheels 48 that allow for a rolling movement of the filler application head 41 on an outer surface of the raw wind turbine blade 1. The wheels 48 are arranged spaced apart along the spanwise direction S respectively along the feed direction F. Additionally, further wheels may be provided with a spacing along the circumferential direction of the blade 1 with respect to an intended state of use of the filler material application apparatus 4. At least one dispenser nozzle 416 that is fluidically couplable to the filler material source 49 through the fluid line 50 is arranged between the two wheels 48. The wheels 48 ensure that a distance between the dispenser nozzle 416 and the groove 2 of the wind turbine blade 1 can be kept constant as the filler application head 41 is moved along the spanwise direction S of the blade 1 during operation of the filler material application apparatus 4.

The filler application head 41 further comprises at least one spatula 411 that is adapted and configured to smoothen a surface of the hardenable filler material after it has been filled to the groove 2 as the filler application head 41 is moved along the spanwise direction S of the blade 1. The at least one spatula 411 is arranged behind the at least one dispenser nozzle 416 with respect to the feed direction F. The spatula 411 may comprise multiple spatula segments that are arranged at the filler application head 41 spaced apart along the spanwise direction S respectively along the feed direction F. An extension of the spatula segments in a direction running normally to a ground of the at least one groove 2 with respect to an intended state of use of the filler material application apparatus 4 might in particular decrease along the feed direction F so that the hardenable filler material within the groove 2 can be beneficially smoothened step by step.

A shape of the spatula 411 is adaptable at least with respect to a plane running perpendicular to the spanwise direction S so that it corresponds with a shape of a cross-section of an airfoil geometry of the wind turbine blade 1 at a given spanwise position. The shape of the spatula 411 might be adapted before or after the filler application head 41 is placed over a section of the groove 2 to commence the filling procedure.

In other words, the shape of the spatula 411 can be adaptable so that the spatula 411 can adopt a cross-sectional shape representing a negative of a cross-sectional shape of the airfoil geometry of the wind turbine blade 1 at a given spanwise position.

As the blade 1 has variable cross-sections along the spanwise direction S and additionally might be twisted, the shape of the spatula 411 can be continuously adapted as the filler application head 41 is moved along the spanwise direction S to always correspond with a local shape of a cross-section of the airfoil geometry of the blade 1.

**Fig. 8** shows an alternative to Fig. 3 in that the filler application head 41 is not fixed to an apparatus base 42 but to a crane or gantry system 60 above the raw wind turbine blade 1. The crane or gantry system 60 allows movement of the filler application head 41 in the spanwise direction S of the raw wind turbine blade 1. The overall function of the filler application head 41 is however identical to the before described embodiments and therefore is not repeated. The crane or gantry system 60 may comprise a first beam 601 running along the spanwise direction S. On the first beam 601 a beam trolley 602 may be moveably arranged along the spanwise direction S. The beam trolley 602 may comprise one or multiple wheels that are adapted and configured to roll on the first beam 601. The beam trolley 602 may comprise a drive system, for example an electric drive system, that allows for a movement of the beam trolley 602 along the spanwise direction S. The filler application head 41 may be mounted to the beam trolley 602 by means of a support structure 603 which may in particular extend with a vertical component with regards to an intended state of use of the filler material application apparatus 4. As the beam trolley 602 moves along the extension of the first beam 601 the filler application head 41 moves with it. In other embodiments the crane or gantry system 60 may comprise a second beam extending perpendicular to the first beam's 601 extension, in particular along a thickness direction T of the raw wind turbine blade 1. The first beam 601 and/or the beam trolley 602 may be moveable along an extension of the second beam in order to further adjust a position of the filler application head 41, for example to compensate for varying thickness of the blade 1 along its longitudinal extension. The support structure 603 may comprise one or multiple beams and/or at least one rope or cable that are adapted and configured to mechanically couple the filler application head 41 to the beam trolley 602. In embodiments the crane or gantry system 60 may be a portal crane.

According to this embodiment the filler application head 41 may be as well further moveable in a height direction H, wherein the required degree of freedom of movement can be provided by means of the support structure 603 and/or by means of the filler application head 41 itself. It is in particular possible that the support structure 603 comprises a linear drive system adapted to move the filler application head 41 in height. In other embodiments, in particular if the support structure 603 is provided by at least one rope or cable, the height H adjustment might be carried out by varying a free hanging length of the rope or cable. For this purpose the at least one rope or cable might be attached to at least one driven pulley at the beam trolley 602.

In **Fig. 9** an embodiment of the filler application head 41 is shown as a cross-section through plane C-C depicted in Fig. 7, wherein the sectional plane extends through the at least one spatula 411, in particular through one of the spatula segments. Beneath the spatula 411 the filler application head 41 comprises multiple actuators 413a-g that are variable in length and mechanically coupled to the spatula 411. Each actuator 413a-g is adapted and configured to locally apply a force on the spatula 411. By individually controlling the length of the actuators 413a-g a shape of the spatula 411 can be adapted, e.g. to form a concave shape as it is shown in Fig. 9 or to form a convex shape as it is shown in **Fig. 10****.** The convexity and/or concavity in Fig. 9 and Fig. 10 are shown in an exaggerated way to illustrate the operation of the filler application head 41, although the convexity and/or concavity may be less pronounced in practice.

This adaptability of the shape of the spatula 411 ensures that grooves 2 located in convex and/or concave cross-sections of the raw wind turbine blade 1 can be filled with the hardenable filler material in the best possible way, i.e. without applying too much filler material which particularly helps to reduce later effort to rework the filled groove by grinding.

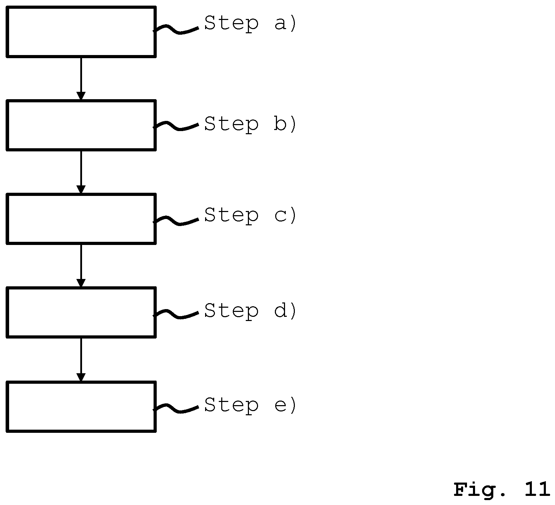

Lastly, **Fig. 11** shows a flow chart of an embodiment of the method according to the invention.

The method comprises the following steps:
a) Manufacturing a raw wind turbine blade 1 or raw wind turbine blade section by lamination of one or multiple layers of fiber material, wherein the raw wind turbine blade 1 or raw wind turbine blade section comprises at least one groove 2 running at least with a directional component along a spanwise direction S;
b) Providing a filler material application apparatus 4
   - comprising a filler application head 41 with at least one dispenser nozzle 416 adapted to dispense a hardenable filler material 3,
   - and comprising at least one filler material source 49 comprising the hardenable filler material in a flowable state, wherein the filler material source 49 is coupled to the dispenser nozzle 416 of the filler application head 41 through at least one fluid line 50,
   - wherein the filler application head 41 is moveable at least along the spanwise direction S;
c) Positioning the filler application head 41 of the filler material application apparatus 4 over a section of the groove 2;
d) Effecting a flow of hardenable filler material 3 from the filler material source 49 to the at least one dispenser nozzle 416 of the filler application head 41 of the filler material application apparatus 4;
e) Moving the filler application head 41 at least with a directional component in the spanwise direction S along an extension of the at least one groove 2, thereby filling the groove 2 with the hardenable filler material 3 that is subsequently hardened so that at least one filled groove 21 is provided.

Although the present invention has been described in accordance with preferred embodiments, it is obvious for the person skilled in the art that modifications are possible in all embodiments.

Independent of the grammatical term usage, individuals with male, female or other gender identities are included within the term.

## Claims

1. Method for manufacturing a wind turbine blade or wind turbine blade section, comprising the steps
a) Manufacturing a raw wind turbine blade (1) or raw wind turbine blade section by lamination of one or multiple layers of fiber material, wherein the raw wind turbine blade (1) or raw wind turbine blade section comprises at least one groove (2) running at least with a directional component along a spanwise direction (S);
b) Providing a filler material application apparatus (4)
- comprising a filler application head (41) with at least one dispenser nozzle (416) adapted to dispense a hardenable
filler material (3),
- and comprising at least one filler material source (49) comprising the hardenable filler material in a flowable state, wherein the filler material source (49) is coupled to the dispenser nozzle (416) of the filler application head (41) through at least one fluid line (50),
- wherein the filler application head (41) is moveable at least along the spanwise direction (S);
c) Positioning the filler application head (41) of the filler material application apparatus (4) over a section of the groove (2);
d) Effecting a flow of hardenable filler material (3) from the filler material source (49) to the at least one dispenser nozzle (416) of the filler application head (41) of the filler material application apparatus (4);
e) Moving the filler application head (41) at least with a directional component in the spanwise direction (S) along an extension of the at least one groove (2), thereby filling the groove (2) with the hardenable filler material (3) that is subsequently hardened so that at least one filled groove (21) is provided.

2. Method according to claim 1, wherein the filler application head (41) of the filler material application apparatus (4) comprises at least one spatula (411), wherein step e) comprises smoothening a surface of the hardenable filler material (3) after it has been filled to the groove (2) with the at least one spatula (411) as the filler application head (41) is moved along the spanwise direction (S).

3. Method according to claim 2, wherein a shape of the spatula (411) of the filler application head (41) is adaptable at least with respect to a plane running perpendicular to the spanwise direction (S), wherein step e) comprises adapting the shape of the spatula (411) so that it corresponds with a shape of a cross-section of an airfoil geometry of the wind turbine blade or wind turbine blade section at a given spanwise position.

4. Method according to any of the claims 1 - 3, wherein the filler application head (41) of the filler material application apparatus (4) is moveable in a height direction (H) with respect to an intended state of use of the filler material application apparatus (4) and wherein step e) comprises continuously adjusting a height position (H) of the filler application head (41) as the filler application head (41) is moved along the spanwise direction (S) to correspond with a local height position of the groove (2).

5. Method according to any of the claims 1 to 4, wherein the raw wind turbine blade (1) or raw wind turbine blade section is fixed by a fixture in a predefined height over the ground (G) so that the spanwise direction (S) runs essentially parallel to the ground (G), wherein in particular a suction side (14) and/or pressure side (13) of the raw wind turbine blade (1) or raw wind turbine blade section are located sidewards.

6. Method according to claim 5, wherein steps c) to e) are executed at a pressure side (13) and/or a suction side (14) of the raw wind turbine blade (1) or raw wind turbine blade section
and/or wherein the filler material application apparatus (4) is located sideways adjacent to the raw wind turbine blade (1) or raw wind turbine blade section.

7. Method according to any of the claims 3 - 6, wherein the filler application head (41) of the filler material application apparatus (4) comprises multiple actuators (413a-g) arranged spaced apart, in particular along a circumferential direction of the raw wind turbine blade (1) or raw wind turbine blade section, wherein the actuators (413a-g) are each adapted to locally apply a force on the spatula (411) and wherein the actuators (413a-g) are used in step e) to adapt the shape of the spatula (411).

8. Method according to claim 7, wherein the filler material application apparatus (4) comprises at least one processing means adapted to at least individually control the actuators (413a-g) and/or the height position (H) of the filler application head (41).

9. Method according to claim 8,
comprising step ee) applying an optical marking (46) on an outer surface of the raw wind turbine blade (1) or raw wind turbine blade section in at least one region laterally neighboring the groove (2),
wherein the filler material application apparatus (4), in particular the filler application head (41) of the filler material application apparatus (4), comprises
- at least one optical sensor adapted to detect the optical marking,
- wherein said optical sensor is operably coupled to the processing means,
wherein in step e) data from the optical sensor is processed by the processing means to adapt the shape of the spatula (411) by individually controlling the multiple actuators (413a-g) to ensure that as little as possible of the hardenable filler material protrudes from the groove (2) and/or to adjust a height position (H) of the filler application head (41) .

10. Method according to any of the preceding claims,
wherein the filler material application apparatus (4), in particular the filler application head (41) of the filler material application apparatus (4), comprises at least one camera and/or at least one distance sensor,
wherein the at least one camera and/or at least one distance sensor are operably coupled to the processing means and wherein in step e) data from the at least one camera and/or at least one distance sensor is processed by the processing means to adapt the shape of the spatula (411) by individually controlling the multiple actuators (413a-g) to ensure that as little as possible of the hardenable filler material protrudes from the groove (2) and/or to adjust a height position (H) of the filler application head (41).

11. Method according to any of the preceding claims, wherein the filler material application apparatus (4) comprises a processing means operably coupled with at least one data source, wherein the data source comprises data describing a three-dimensional shape of an outer surface of the wind turbine blade or wind turbine blade section, wherein in step e) the filler application head (41) is moved along the spanwise direction (S) under continuous adaption of the height position (H) of the filler application head (41) and/or under continuous adaption of the shape of the spatula (411) of the filler application head (41) based on said data.

12. Filler material application apparatus (4) for applying a hardenable filler material (3) into an at least one groove (2) running at least with a directional component along a spanwise direction (S) of a raw wind turbine blade (1) or raw wind turbine blade section, in particular for use in a method according to any of the preceding claims,
the filler material application apparatus (4) comprising:
- a filler application head (41) with at least one dispenser nozzle (416) adapted to dispense a hardenable filler material (3),
- and at least one filler material source (49) comprising the hardenable filler material (3) in a flowable
state, wherein the filler material source (49) is coupled to the dispenser nozzle (416) of the filler application head (41) through at least one fluid line (50),
- wherein the filler application head (41) is moveable at least along the spanwise direction (S) of the raw wind turbine blade (1) or raw wind turbine blade section.

13. Filler material application apparatus (4) according to claim 12, wherein the filler application head (41) of the filler material application apparatus (4) comprises at least one spatula (411), adapted to smoothen a surface of the hardenable filler material (3) after it has been filled to the groove (2), wherein in particular a shape of the spatula (411) is adaptable at least with respect to a plane running perpendicular to the spanwise direction (S) of the raw wind turbine blade (1) or raw wind turbine blade section with respect to an intended use of the filler material application apparatus (4) so that the shape of the spatula (411) is adaptable to correspond with a shape of a cross-section of an airfoil geometry of the wind turbine blade or wind turbine blade section at a given spanwise position.

14. Filler material application apparatus (4) according to claim 12 or 13,
- wherein the filler application head (41) is mounted to an apparatus base (42) that is moveable on the ground (G), wherein in particular the apparatus base (42) comprises a drive system and wheels (43) that allow movement of the apparatus base (42) in the spanwise direction (S) of the raw wind turbine blade (1) or raw wind turbine blade section or
- wherein the filler application head (41) is mounted at a crane or gantry system (60) above the raw wind turbine blade (1) or raw wind turbine blade section in an intended state of use of the filler material application apparatus (4), wherein the crane or gantry system (60) allows movement of the filler application head (41) in the spanwise direction (S) of the raw wind turbine blade (1) or raw wind turbine blade section.

15. Filler material application apparatus (4) according to any of the claims 12 - 14, wherein the filler application head (41) comprises one or multiple wheels (48) that allow for a rolling movement of the filler application head (41) on an outer surface of the raw wind turbine blade (1) or raw wind turbine blade section, wherein in particular at least two wheels (48) are arranged at the filler application head (41) spaced along a circumferential direction of the raw wind turbine blade (1) or raw wind turbine blade section with respect to an intended state of use of the filler material application apparatus (4), and wherein in particular the at least one dispenser nozzle (416) is arranged between the two wheels (48).
